# FASCICULE DE BREVET EUROPEEN

(11) **EP 3 310 502 B1**
(45) Date de publication et mention de la délivrance du brevet: **04.09.2019**
(21) Numéro de dépôt: 16733635.3
(22) Date de dépôt: 26.05.2016
(51) Int. Cl.: B07C 7/00

(54) **PROCÉDÉ ET DISPOSITIF POUR FUSIONNER MANUELLEMENT DES OBJETS POSTAUX DANS UNE PILE D'ARTICLES DE COURRIER DÉJÀ TRIES**
VERFAHREN UND VORRICHTUNG ZUM MANUELLEN VEREINEN VON POSTGEGENSTÄNDEN MIT EINEM STAPEL VON BEREITS SORTIERTEN POSTGEGENSTÄNDEN
METHOD AND DEVICE FOR MANUALLY COMBINING MAIL OBJECTS INTO A PILE OF ALREADY SORTED MAIL ITEMS

(30) Priorité: 16.06.2015 FR 1555498
(43) Date de publication de la demande: 25.04.2018
(73) Titulaire: Solystic, 92220 Bagneux (FR)
(72) Inventeur: VOLTA, Bruno, 91190 Gif Sur Yvette (FR); MIETTE, Emmanuel, 95210 Saint Gratien (FR)
(74) Mandataire: Prugneau, Philippe
(86) Numéro de dépôt international: PCT/FR2016/051242
(87) Numéro de publication internationale: WO 2016/203126

(56) Documents cités:
- WO-A1-2014/087069
- DE-A1-102010 043 389

## Description

### Domaine technique

Le domaine de l'invention est le tri postal. L'invention concerne plus particulièrement un procédé pour fusionner manuellement des objets postaux avec des articles de courrier déjà triés en machine selon un certain ordre de tri, par exemple selon la tournée du facteur.

Ces objets postaux sont en particulier mais non exclusivement des objets postaux non mécanisables qui ne sont pas actuellement triés automatiquement en machine de tri.

### Technique antérieure

Les machines et les procédés de tri postal utilisés pour la préparation de la tournée du facteur peuvent être intégralement automatiques ou peuvent comporter des étapes dans lesquelles l'intervention d'un Opérateur est nécessaire, notamment dans le cas de traitement d'objets postaux non mécanisables.

A ce sujet, on connait déjà du brevet WO2014/087069 un procédé pour fusionner un objet postal dans du courrier trié dans lequel une aide par désignation visuelle de l'emplacement d'insertion de l'objet postal dans la pile est effectuée.

On connait également du brevet DE 10 2010 043 389 un procédé pour fusionner manuellement des objets postaux non mécanisables avec du courrier trié en machine. Dans ce procédé connu, une aide à la fusion est apportée à l'Opérateur chargé de réaliser la fusion. Cette aide consiste à afficher sur un écran d'affichage placé à côté de l'opérateur, l'image d'un article de courrier de référence qui doit précéder ou qui doit suivre dans la séquence ordonnée des articles de courrier l'objet postal à fusionner. Pour cela, on forme avec une caméra une image numérique de l'objet postal à fusionner, et à partir des données des articles de courrier produites dans la machine de tri lors des passes de tri précédentes et d'un plan de tri qui correspond à l'ordonnancement de ces articles de courrier dans la séquence, on détermine cet article de courrier de référence.

Ensuite, l'opérateur balaie la séquence d'articles de courrier jusqu'à identifier visuellement l'article de courrier de référence, suite à quoi il peut insérer au bon endroit l'objet postal dans la séquence ordonnée des articles de courrier.

Ce type de fusion manuelle dans la préparation de la tournée du facteur est très consommatrice de temps pour l'Opérateur par rapport au faible nombre d'objets postaux à fusionner et ne peut pas garantir une bonne fiabilité dans le tri.

### Exposé de l'invention

Le but de l'invention est donc de remédier à ces inconvénients.

L'idée à la base de l'invention consiste à accélérer la préparation de la tournée du facteur en apportant à l'Opérateur des moyens supplémentaires d'aide à la fusion.

L'idée consiste plus particulièrement à afficher sur un écran d'affichage toutes les indications nécessaires à l'Opérateur pour prélever un ou une poignée d'objets postaux non mécanisables pour les insérer dans une même fente d'insertion d'une pile d'articles de courrier déjà triés.

L'idée consiste également à proposer un moyen pour contrôler automatiquement le nombre d'objets postaux fusionnés à chaque insertion dans la pile. Non seulement la fusion des objets postaux dans la pile d'articles de courrier s'en trouve accélérée mais le risque d'erreur de tri est également grandement limité.

A cet effet, l'invention a donc pour objet un procédé pour fusionner des objets postaux dans une pile d'articles de courrier déjà triés en machine selon un certain ordre de tri, caractérisé en ce qu'il comprend les étapes suivantes :
- on insère lesdits objets postaux dans un casier à fentes en séquence selon ledit certain ordre de tri, le casier étant conçu pour permettre un prélèvement manuel par poignée desdits objets postaux,
- on dispose ladite pile d'articles de courrier sur une table de fusion à proximité dudit casier,
- une unité de contrôle/commande maintenant en mémoire des données de tri de la séquence d'objets postaux et des données de tri de la pile d'articles de courrier affiche sur un écran d'affichage une indication qui est représentative à la fois d'une position d'insertion d'objets postaux dans la pile d'articles de courrier et d'un nombre d'objets postaux à prélever dans le casier et à fusionner dans ladite pile d'articles de courrier à ladite position d'insertion,
- on prélève manuellement dudit casier ledit nombre d'objets postaux indiqué sur l'écran et on insère ces objets postaux dans la pile d'articles de courrier à ladite position d'insertion indiquée sur l'écran,
- et on mesure par l'intermédiaire de ladite unité de contrôle/commande une première et une seconde distance par rapport au premier objet postal dans le casier en tête de séquence respectivement avant et après le prélèvement dudit nombre d'objets postaux indiqué sur l'écran et à partir de ces deux mesures de distance, si l'unité de contrôle/commande détecte une erreur de prélèvement des objets postaux dans le casier, elle produit un signal d'erreur.

On comprendra donc que ce procédé est particulièrement adapté lorsque plusieurs objets postaux sont à fusionner dans une même position d'insertion de la pile d'articles de courrier déjà triés.

La vitesse de fusion peut ainsi être augmentée et les coûts de manutention diminués.

De même que l'on comprendra que le signal d'erreur apporte à l'Opérateur l'information nécessaire pour rectifier l'erreur d'insertion et garantir une fiabilité de fusion bien plus importante que pour les procédés de fusion connus.

Le procédé selon l'invention peut avantageusement présenter les particularités suivantes :
- l'unité de contrôle/commande mesure lesdites première et seconde distances à l'aide d'un télémètre pointant sur ledit objet postal en tête de séquence dans le casier.
- l'unité de contrôle/commande affiche le signal d'erreur sur l'écran.

L'invention s'étend également à un dispositif d'aide à la fusion comprenant :
- un casier à fentes verticales pour stocker sur chant les objets postaux à fusionner, les fentes verticales se succédant entre deux extrémités distales du casier,
- une table de fusion horizontale qui est disposée sous le casier apte à stocker une pile d'articles de courrier,
- une unité de contrôle/commande avec un écran d'affichage, l'unité étant reliée à un télémètre disposé face à une extrémité distale du casier.

Le dispositif d'aide à la fusion peut encore présenter les particularités suivantes:
- le casier présente des parois de séparations des fentes qui sont en forme de L.
- la dite table de fusion est disposée pour s'étendre transversalement au casier.

### Présentation sommaire des dessins

La présente invention sera mieux comprise et d'autres avantages apparaîtront à la lecture de la description qui suit et des dessins annexés.
La figure 1 illustre de façon schématique un dispositif d'aide à la fusion pour mettre en oeuvre le procédé de fusion selon l'invention dans un certain état avant une fusion d'objets postaux parmi des articles de courrier.
La figure 2 illustre de façon schématique le dispositif d'aide à la fusion de la figure 1 dans un état après la fusion des objets postaux parmi les articles de courrier.
La figure 3 est un diagramme qui illustre les principales étapes du procédé selon l'invention.

### Description d'un mode de réalisation

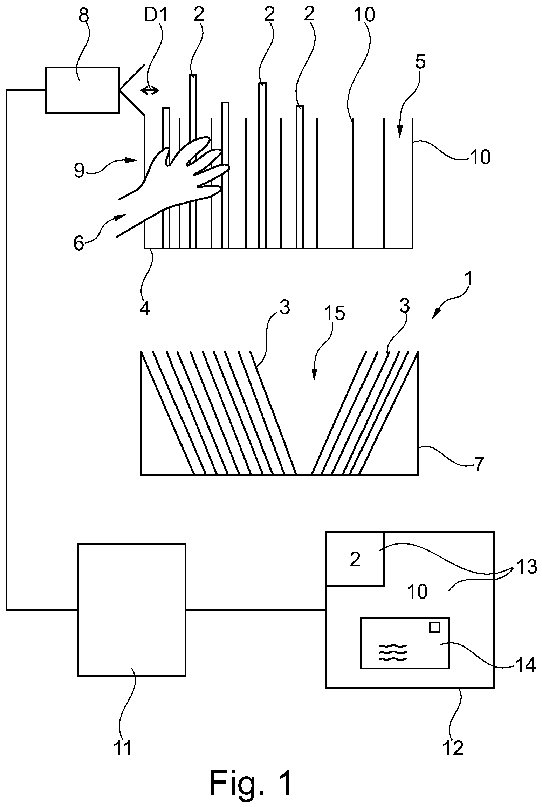

Sur la figure 1, on a illustré de façon très schématique un dispositif d'aide 1 à la fusion d'objets postaux 2, notamment des objets postaux non mécanisables, dans une pile d'articles de courrier 3 qui sont déjà triés suivant un certain ordre de tri, par exemple selon la tournée du facteur. Les articles de courrier 3 sont par exemple des lettres, magazines ou autre objets postaux plats mécanisables, c'est-à-dire pouvant être triés automatiquement dans une machine de tri postal comme cela est connu de l'Homme du métier

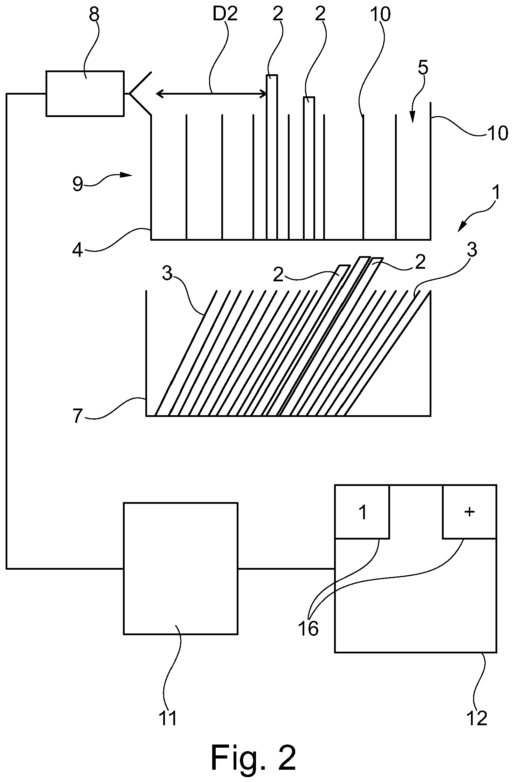

Le dispositif d'aide à la fusion 1 comprend ici un casier de tri linéaire ou casier 4 à fentes verticales 5 aptes à recevoir chacune un ou plusieurs objets postaux 2 sur chant. Les fentes verticales 5 se succèdent parallèlement entre deux extrémités distales du casier 4 suivant sa grande longueur et le casier présente des parois de séparation 10 des fentes qui s'étendent dans un plan perpendiculaire à la grande longueur du casier et qui sont conçues pour permettre à un Opérateur symbolisé par une main 6 sur la figure 1 de prélever par poignée les objets postaux 2 insérés dedans. Dans l'exemple illustré sur les figures 1 et 2, les parois 10 de séparation des fentes sont en forme de L dans le plan perpendiculaire à la grande longueur du casier de sorte que les fentes sont ouvertes à la fois sur la face frontale et sur la face du dessus du casier.

Le dispositif 1 d'aide à la fusion comprend en outre une table de fusion 7 qui se présente ici dans le fond d'un bac dans lequel les articles de courrier 3 déjà triés sont disposés en pile sur champ. Sur la figure 1, on a illustré la pile d'articles de courrier 3 qui a été séparée en deux parties de part et d'autre d'une fente d'insertion 15 en forme de V.

Selon l'invention, pour faciliter la fusion manuelle des objets postaux 2 avec les articles de courrier 3, le casier 4 est placé au-dessus de la table de fusion 7 à portée de main de l'Opérateur 6 et de la table de fusion 7 (et donc de la pile d'articles de courrier 3 sur chant) qui s'étend ici transversalement au casier 4 (c'est-à-dire sur la grande longueur du casier 4). Sans restreindre la portée de l'invention, la table de fusion peut également s'étendre perpendiculairement à la longueur du casier.

Le dispositif 1 d'aide à la fusion comprend encore un télémètre 8 qui est comme visible sur la figure 1 placé face à une extrémité distale 9 du casier 4, cette extrémité étant celle qui est orientée du côté de l'objet postal 3 en tête de séquence dans le casier (c'est-à-dire l'objet postal en tête de prélèvement dans le casier pour réaliser les opérations de fusion successives des objets postaux parmi les articles de courrier). Le télémètre 8 pointe ici par exemple dans l'angle du L des parois 10 pour mesurer à chaque fois une distance relative par rapport au premier objet postal courant en tête de séquence dans le casier, que ce soit un petit ou un grand objet postal.

Sans restreindre la portée de l'invention, les parois 10 peuvent présenter chacune une ouverture dans l'angle du L à travers laquelle pointe le télémètre 8. Ainsi, le télémètre 8 peut mesurer une distance même avec des objets postaux 2 de très petite taille qui ne dépassent pas des bords des parois en L du casier.

Le dispositif d'aide à la fusion comprend encore une unité de contrôle/commande 11 apte à maintenir en mémoire des données de tri de la séquence d'objets postaux 2 à fusionner et des données de tri des articles de courrier 3 déjà triés et à partir de ces données de générer des indications pour un Opérateur qui sont représentatives, pour une opération courante de fusion, d'une position courante d'insertion d'objets postaux du casier dans la pile d'articles de courrier et aussi d'un nombre courant d'objets postaux à prélever dans le casier depuis la tête de la séquence d'objets postaux et à insérer à la position courante dans la pile d'articles de courrier.

Les données de tri peuvent être constituées par une liste ordonnée de points de distribution qui correspondent par exemple à la liste des adresses de distribution des articles de courrier en pile sur chant sur la table de fusion.

Ces données de tri peuvent être produites par une machine de tri postale classique avec des sorties de tri dans laquelle les articles de courrier ont été triés automatiquement selon par exemple un plan de tri de la tournée du facteur.

Pour les objets postaux non mécanisables, les données de tri peuvent être générées par exemple à partir d'un système de reconnaissance optique des adresses de distribution sur les objets postaux et d'ordonnancement semi automatique avec le même plan de tri que ci-dessus de ces adresses reconnues automatiquement et simultanément à une mise en séquences manuelle de ces objets postaux dans le casier.

A partir de ces données de tri, l'unité de contrôle/commande 11 est apte par exemple à identifier et comptabiliser dans la séquence d'objets postaux, les objets postaux par point de distribution et à partir de l'identification des différents points de distribution dans la séquence des objets postaux, à localiser parmi les articles de courrier triés en séquence, la position des différents points d'insertion pour les objets postaux qui correspondent aux points de distribution des objets postaux.

L'unité de contrôle/commande 11 peut être programmée pour, sur détection d'une activation par exemple par un appui touche, afficher sur l'écran 12 une indication 13 représentative du nombre courant d'objets postaux à prélever du casier pour une opération courante de fusion, et aussi représentative de la position courante d'insertion des objets postaux dans la pile d'articles de courrier. Sur la figure 1, l'indication 13 comprend un premier nombre, dans l'exemple le nombre 2 en haut à gauche de l'écran, d'objets à prélever du casier 4 et un second nombre, dans l'exemple le nombre 10 en bas à droite de l'écran, qui désigne que la position d'insertion courante est positionnée juste après le 10ème article de courrier compté depuis la tête de la pile d'articles de courrier.

L'Opérateur peut alors balayer les dix articles de courrier depuis la tête de la pile et entre le dixième et le onzième article de courrier, former une fente d'insertion 15 en forme de V comme illustré sur la figure 1. Il saisit ensuite les deux objets postaux en tête de séquence dans le casier et les insère dans la fente 15 pour réaliser la fusion.

Puis sur détection d'un nouvel appui touche, l'unité de contrôle/commande 11 affiche sur l'écran 12 une nouvelle indication 13 avec un nouveau nombre courant d'objets postaux à prélever du casier et une nouvelle position courante d'insertion des objets postaux dans la pile d'articles de courrier.

Avantageusement, l'unité de contrôle/commande peut être agencée pour en plus afficher sur l'écran 12 l'image de l'article de courrier immédiatement en aval de la fente d'insertion 15 ce qui permet à l'Opérateur de contrôler visuellement la bonne position de la fente d'insertion 15 dans la pile.

Selon l'invention, l'unité de contrôle/commande 11 est programmée pour réaliser à chaque opération de fusion deux mesures de distance successives avec le télémètre 8 pour un meilleur contrôle de l'opération de fusion, l'une respectivement avant la fusion des objets postaux courants dans la pile d'article de courrier, l'autre respectivement après la fusion des objets postaux courants dans la pile des articles de courrier.

En particulier, avec un casier 4 et des fentes 5 espacées entre elles à intervalle constant, et des objets postaux répartis dans les fentes, un ou plusieurs objets postaux par fente du casier, la différence entre les deux mesures de distance avant et après fusion, correspond au nombre d'objets postaux indiqué en haut à gauche sur l'écran d'affichage 12.

Sur cette base, l'unité de contrôle/commande 11 est apte à détecter une erreur en plus ou en moins sur le nombre d'objets postaux réellement prélevés dans le casier à chaque opération de fusion, et en réponse à la détection d'une erreur de prélèvement, produire un signal d'erreur pour l'Opérateur, par exemple en affichant une indication 16 illustrée sur la figure 2.

Cette indication 16 peut par exemple comporter un signe + ou - affiché en haut à droite de l'écran qui indique si trop ou pas assez d'objets postaux ont été fusionnés et un chiffre affiché en haut à gauche de l'écran qui indique le nombre d'objets postaux associés au + ou au -.

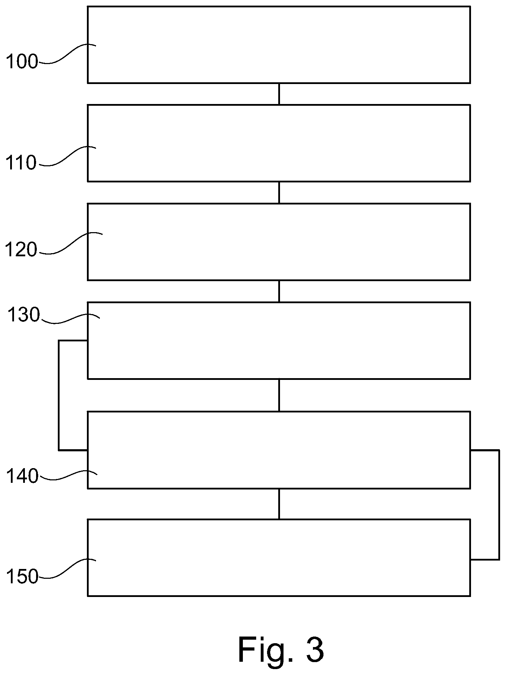

La figure 3 illustre les étapes successives d'une opération de fusion avec le dispositif d'aide à la fusion illustré sur les figures 1 et 2.

A l'étape 100, l'Opérateur 6 place sur la table de fusion 7 une pile d'articles de courrier 3 et dans le casier 4 une séquence d'objets postaux à fusionner.

A l'étape 110, l'Opérateur active l'unité de contrôle/commande 11, par exemple par un appui touche, ce qui provoque un affichage sur l'écran 12 d'une indication courante 13 et le cas échéant une image de contrôle 14.

Dans l'étape 110, l'unité de contrôle/commande relève une première distance D1 de contrôle (voir figure 1) par l'intermédiaire du télémètre 8 qui pointe sur l'objet postal courant en tête de séquence dans le casier.

Dans l'étape 120, l'Opérateur balaie la pile d'articles de courrier pour former une fente d'insertion 15 à la position indiquée par l'indication courante 13.

Dans l'étape 130, l'Opérateur saisit dans le casier 4 un ou une poignée d'objets postaux en fonction de l'indication courante 13 affichée sur l'écran 12 et insère ces objets postaux dans la fente d'insertion 15 formée dans la pile d'articles de courrier à l'étape 120.

L'Opération de fusion courante est terminée et dans l'étape 130, l'Opérateur active de nouveau l'unité de contrôle/commande par un appui touche.

Dans l'étape 140, en réponse à la détection de l'appui touche, l'unité de contrôle/commande 11 relève une seconde distance D2 de contrôle (voir figure 2) par l'intermédiaire du télémètre 8 qui pointe maintenant sur un nouvel objet postal courant en tête de séquence dans le casier.

Dans l'étape 150, l'unité de contrôle/commande 11 compare les deux mesures de distance D1 et D2 et si elle détecte que l'écart entre D1 et D2 ne correspond pas au nombre d'objets postaux à prélever dans l'étape 130, elle provoque l'affichage sur l'écran 12 d'un message d'erreur tel que 16.

Le processus revient ensuite à l'étape 110 dans laquelle l'unité de contrôle/commande 11 attend la détection d'un nouvel appui touche.

Si l'unité de contrôle/commande 11 ne détecte pas d'erreur de prélèvement, le processus revient directement à l'étape 110 sans attendre la détection d'un appui touche.

## Revendications

1. Procédé pour fusionner des objets postaux (2) dans une pile d'articles de courrier (3) déjà triés en machine selon un certain ordre de tri, **caractérisé en ce qu'**il comprend les étapes suivantes :
- on insère lesdits objets postaux (2) dans un casier (4) à fentes (5) en séquence selon ledit certain ordre de tri, le casier (4) étant conçu pour permettre un prélèvement manuel par poignée desdits objets postaux (2),
- on dispose ladite pile d'articles de courrier (3) sur une table de fusion (7) à proximité dudit casier (4),
- une unité de contrôle/commande (11) maintenant en mémoire des données de tri de la séquence d'objets postaux (2) et des données de tri de la pile d'articles de courrier (3) affiche sur un écran d'affichage (12) une indication (13) qui est représentative à la fois d'une position d'insertion d'objets postaux (2) dans la pile d'articles de courrier (3) et d'un nombre d'objets postaux (2) à prélever dans le casier et à fusionner dans ladite pile d'articles de courrier (3) à ladite position d'insertion,
- on prélève manuellement dudit casier (4) ledit nombre d'objets postaux (2) indiqué sur l'écran (12) et on insère ces objets postaux (2) dans la pile d'articles de courrier (3) à ladite position d'insertion indiquée sur l'écran (12),
- et on mesure par l'intermédiaire de ladite unité de contrôle/commande (11) une première et une seconde distance (D1,D2) par rapport au premier objet postal dans le casier en tête de séquence respectivement avant et après le prélèvement dudit nombre d'objets postaux indiqué sur l'écran (12) et à partir de ces deux mesures de distance, si l'unité de contrôle/commande détecte une erreur de prélèvement des objets postaux dans le casier, elle produit un signal d'erreur.

2. Procédé selon la revendication 1, **caractérisé en ce que** ladite unité de contrôle/commande (11) mesure lesdites première et seconde distances à l'aide d'un télémètre (8) pointant sur ledit objet postal en tête de séquence dans le casier (4).

3. Procédé selon la revendication 1 ou 2, **caractérisé en ce que** l'unité de contrôle/commande (11) affiche le signal d'erreur sur l'écran (12).

4. Dispositif d'aide à la fusion pour la mise en oeuvre du procédé selon l'une des revendications précédentes, comprenant :
- un casier (4) à fentes verticales (5) pour stocker sur chant les objets postaux (2) à fusionner, les fentes verticales (5) se succédant entre deux extrémités distales du casier,
- une table de fusion (7) horizontale qui est disposée sous le casier (4) apte à stocker une pile d'articles de courrier (3),
- une unité de contrôle/commande (11) avec un écran d'affichage (12), l'unité (11) étant reliée à un télémètre (8) disposé face à une extrémité distale (9) du casier (4).

5. Dispositif selon la revendication 4, **caractérisé en ce que** le casier (4) présente des parois de séparation (10) des fentes qui sont en forme de L.

6. Dispositif selon la revendication 4 ou 5, **caractérisé en ce que** ladite table de fusion (7) est disposée pour s'étendre transversalement au casier (4).

## Patentansprüche

1. Verfahren zum Zusammenführen von Postgegenständen (2) in einem Stapel von Postsendungen (3), welche bereits maschinell gemäß einer bestimmten Sortierfolge sortiert sind, **dadurch gekennzeichnet, dass** es die folgenden Schritte aufweist:
- die Postgegenstände (2) werden in einen Ablagekasten (4) mit Schlitzen (5) in der Reihenfolge gemäß der bestimmten Sortierfolge eingelegt, wobei der Ablagekasten (4) dafür ausgelegt ist, eine manuelle Entnahme per Handgriff der Postgegenstände (2) zu ermöglichen,
- der Stapel von Postsendungen (3) wird auf einem Zusammenführtisch (7) in der Nähe des Ablagekastens (4) angeordnet,
- eine Überwachungs- / Steuereinheit (11), welche Sortierdaten der Reihenfolge von Postgegenständen (2) und Sortierdaten des Stapels von Postsendungen (3) gespeichert hält, zeigt auf einem Anzeigebildschirm (12) einen Hinweis (13) an, welcher zur gleichen Zeit repräsentativ ist für eine Einlegeposition von Postgegenständen (2) in dem Stapel von Postsendungen (3) und eine Anzahl von in dem Ablagekasten zu entnehmenden und in dem Stapel von Postsendungen (3) in der Einlegeposition zusammenzuführenden Postgegenständen (2),
- manuell wird aus dem Ablagekasten (4) die auf dem Bildschirm (12) angegebene Anzahl von Postgegenständen (2) entnommen und diese Postgegenstände (2) werden in den Stapel von Postsendungen (3) an der auf dem Bildschirm (12) angegebenen Position eingelegt,
- und mit Hilfe der Überwachungs- / Steuereinheit (11) werden ein erster und ein zweiter Abstand (D1, D2) in Bezug auf den ersten Postgegenstand in dem Ablagekasten am Anfang der Reihenfolge jeweils vor und nach der Entnahme der auf dem Bildschirm angegebenen Anzahl von Postgegenständen (12) gemessen, und falls die Überwachungs- / Steuereinheit einen Fehler der Entnahme der Postgegenstände in dem Ablagekasten erfasst, erzeugt sie ausgehend von diesen beiden Abstandsmessungen ein Fehlersignal.

2. Verfahren nach Anspruch 1, **dadurch gekennzeichnet, dass** die Überwachungs- / Steuereinheit (11) die ersten und zweiten Abstände mit Hilfe eines Entfernungsmessers (8) misst, welcher auf den Postgegenstand am Anfang der Reihenfolge in dem Ablagekasten (4) zeigt.

3. Verfahren nach Anspruch 1 oder 2, **dadurch gekennzeichnet, dass** die Überwachungs- / Steuereinheit (11) das Fehlersignal auf dem Bildschirm (12) anzeigt.

4. Vorrichtung zur Unterstützung der Zusammenführung für die Durchführung des Verfahrens nach einem der vorhergehenden Ansprüche, aufweisend:
- einen Ablagekasten (4) mit vertikalen Schlitzen (5), um die zusammenzuführenden Postgegenstände (2) auf der Schmalseite zu lagern, wobei die vertikalen Schlitze (5) zwischen zwei entfernten Enden des Ablagekastens aufeinander folgen,
- einen horizontalen Zusammenführtisch (7), welcher unter dem Ablagekasten (4) angeordnet und in der Lage ist, einen Stapel von Postsendungen (3) zu lagern,
- eine Überwachungs- / Steuereinheit (11) mit einem Anzeigebildschirm (12), wobei die Einheit (11) mit einem Entfernungsmesser (8) verbunden ist, welcher einem entfernten Ende (9) des Ablagekastens (4) zugewandt angeordnet ist.

5. Vorrichtung nach Anspruch 4, **dadurch gekennzeichnet, dass** der Ablagekasten (4) Wände zur Trennung (10) der Schlitze aufweist, welche L-förmig sind.

6. Vorrichtung nach Anspruch 4 oder 5, **dadurch gekennzeichnet, dass** der Zusammenführtisch (7) angeordnet ist, um sich quer zu dem Ablagekasten (4) zu erstrecken.

## Claims

1. A method of merging postal articles (2) with a stack of mailpieces (3) that have already been machine-sorted into a certain sorting order, said method being **characterized in that** it comprises the following steps:
• inserting the postal articles (2) in sequence into a sorting frame (4) having slots (5) so that the postal articles (2) are in said certain sorting order, the frame (4) being designed to enable said postal articles (2) to be taken manually in handfuls;
• placing said stack of mailpieces (3) on a merge table (7) in the vicinity of said frame (4);
• displaying an indication (13) on a display screen (12) of a monitoring and control unit (11) that keeps in a memory sorting data for the sequence of postal articles (2) and sorting data for the stack of mailpieces (3), which indication is representative both of an insertion position at which the postal articles (2) should be inserted into the stack of mailpieces (3), and also of a number of postal articles (2) to be taken from the frame and to be merged with said stack of mailpieces (3) at said insertion position;
• manually taking from said frame (4) said number of postal articles (2) indicated on the screen (12), and inserting said postal articles (2) into the stack of mailpieces (3) at said insertion position indicated on the screen (12); and
• having said monitoring and control unit (11) measure first and second distances (D1, D2) relative to the first postal article in the sorting frame at the head of the sequence respectively before and after said number of postal articles indicated on the screen (12) are taken, and, on the basis of these two distance measurements, if the monitoring and control unit detects an error in the taking of the postal articles from the frame, having said unit generate an error signal.

2. A method according to claim 1, **characterized in that** said monitoring and control unit (11) measures said first and second distances by means of a range finder (8) pointing to said postal article at the head of the sequence in the frame (4).

3. A method according to claim 1 or claim 2, **characterized in that** the monitoring and control unit (11) displays the error signal on the screen (12).

4. Apparatus for assisting in merging for implementing the method according to any preceding claim, comprising:
• a sorting frame (4) having vertical slots (5) for storing on edge the postal articles (2) to be merged, the vertical slots (5) succeeding one another between two distal ends of the frame;
• a horizontal merge table (7) that is disposed under the frame (4) and suitable for storing a stack of mailpieces (3); and
• a monitoring and control unit (11) with a display screen (12), the unit (11) being connected to a range finder (8) disposed facing a distal end (9) of the frame (4).

5. Apparatus according to claim 4, **characterized in that** the frame (4) has separating walls (10) for separating the slots, which walls are L-shaped.

6. Apparatus according to claim 4 or claim 5, **characterized in that** said merge table (7) is disposed to extend transversely to the frame (4).
